# EUROPEAN PATENT APPLICATION

(11) **EP 4 818 261 A1**
(43) Date of publication of application: **07.10.2026**
(21) Application number: 24896222.7
(22) Date of filing: 07.11.2024
(51) Int. Cl.: C08L 69/00, C08L 83/10, C08J 5/00

(54) **POLYCARBONATE COMPOSITION AND MOLDED PRODUCT**

(30) Priority: 27.11.2023 CN 202311592247; 16.07.2024 CN 202410951163
(71) Applicant: TEIJIN LIMITED, Kita-ku, Osaka-shi, Osaka 530-0005 (JP)
(72) Inventor: LU, Xianghao, Shanghai 200131 (CN); GU, Yi, Shanghai 200131 (CN)
(74) Representative: Kraus & Lederer PartGmbB
(86) International application number: PCT/CN2024/130355
(87) International publication number: WO 2025/113131

(57) **Abstract**

Specific embodiments of the present invention provide a polycarbonate composition and a molded product thereof. The polycarbonate composition comprises: a polycarbonate resin as component A and a polycarbonate-polyorganosiloxane copolymer as component B, totaling 100 parts by weight, wherein the polyorganosiloxane accounts for 0.4-5.9 wt% based on the total wight of component A and component B; 0.5-10 parts by weight of polyorganosiloxane grafted copolymer rubber particles as component C, wherein the mass fraction of the polyorganosiloxane in component C is Y%, the average particle size of component C is Z nm, and Y and Z meet the following conditions: Y ≥ -Z/10 + 70 (wherein Y ≥ 25, and 1000 ≥ Z ≥ 200); and 0.5-25 parts by weight of a phorsphorus flame retardant as D component. The polycarbonate composition can well achieve low-temperature impact, thin-wall flame retardance and light-resistant and water-resistant characteristics.

## Description

### CROSS-REFERENCE TO RELATED APPLICATIONS

This application claims the benefit of priority to Chinese Patent Application No. 202311592247.2, filed on November 27, 2023 with China National Intellectual Property Administration, and entitled "POLYCARBONATE COMPOSITION AND MOLDED PRODUCT" and to Chinese Patent Application No. 202410951163.1, filed on July 16, 2024 with China National Intellectual Property Administration, and entitled "POLYCARBONATE COMPOSITION AND MOLDED PRODUCT", the entire disclosures of which are incorporated herein by reference.

### TECHNICAL FIELD

The present disclosure relates to the field of polymer materials, and more particularly, to a polycarbonate composition and a molded product.

### BACKGROUND

Polycarbonate resin (PC) is widely used in mechanical components, automobile parts, electrical and electronic components, office equipment components, and the like, due to its excellent properties, such as, mechanical strength, dimensional stability, and flame retardancy, and the like. When used as a raw material for housings of communication boxes, junction boxes for solar power generation, and electric vehicle (EV) charging equipment, a polycarbonate resin requires relatively good fluidity, thin-wall flame retardancy, high impact resistance in low-temperature winter environments, and durability that prevents it from easily deteriorating under ultraviolet light or exposure to wind and rain, because the housings are typically large and used outdoors. However, existing polycarbonate resins cannot meet these requirements and need to be modified.

In order to improve low-temperature impact resistance and durability of the polycarbonate resin, JPH00881620A and WO2011/1551490 propose a method where polytetrafluoroethylene particles or an organometallic salt flame retardant is added in a polycarbonate-polydiorganosiloxane copolymer. This method is insufficient for flame retardancy of thin-wall products or products suffered a water immersion experiment. In addition, WO2022/168454 proposes a method where a phosphazene compound and a fluorine-containing anti-drip agent are added in a polycarbonate-polydiorganosiloxane copolymer with a specific viscosity-average molecular weight and the polycarbonate resin. In this method, however, the polycarbonate-polydiorganosiloxane copolymer has a high viscosity-average molecular weight and thus poor fluidity, and cannot satisfy the low-temperature impact resistance at the same time. Further, JP2014058607A proposes a method where a polyorganosiloxane-acrylic composite rubber is added in a polycarbonate-polyorganosiloxane copolymer with specific repeating units of organosiloxane. However, this method is insufficient for flame retardancy of thin-wall products, and light and water impact resistance of products prepared thereby needs to be further improved.

### SUMMARY

Embodiments of the present disclosure provide a flame-retardant polycarbonate composition and a molded product that better balances low-temperature impact resistance and durability.

The polycarbonate composition includes:
a polycarbonate resin as component A and a polycarbonate-polyorganosiloxane copolymer as component B, totaling 100 parts by weight, and based on a total weight of components A and B, the polyorganosiloxane accounts for 0.4 wt% to 5.9 wt%;
0.5 parts by weight to 10 parts by weight of polyorganosiloxane-grafted copolymer rubber particles as component C, and the polyorganosiloxane has a mass percentage of Y% in the component C, the component C has an average particle size of Z nm, and Y and Z satisfy the following condition:
   $Y \geq - Z / 10 + 70 \left(where Y\geq 25, 1000\geq Z\geq 200\right) ;$ and
0.5 parts by weight to 25 parts by weight of a phosphorus-based flame retardant as component D.

In some embodiments, the polycarbonate of the component A and the polycarbonate part in the component B are each independently composed of structural units of the following formula (1):

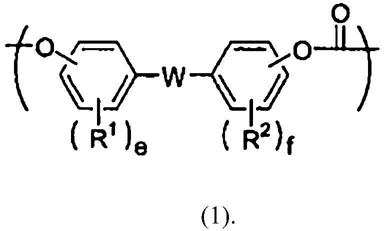

In the above formula (1), e R¹ and f R² are each independently selected from a group consisting of a hydrogen atom, halogen atoms, alkyl groups with 1 to 18 carbon atoms, alkoxy groups with 1 to 18 carbon atoms, cycloalkyl groups with 6 to 20 carbon atoms, cycloalkoxy groups with 6 to 20 carbon atoms, alkenyl groups with 2 to 10 carbon atoms, aryl groups with 6 to 14 carbon atoms, aryloxy groups with 6 to 14 carbon atoms, aralkyl groups with 7 to 20 carbon atoms, arylalkoxy groups with 7 to 20 carbon atoms, nitro groups, aldehyde groups, cyano groups, and carboxyl groups; e and f are each independently an integer from 1 to 4; and W is a single bond or at least one group selected from a group consisting of groups represented by the following general formula (2):

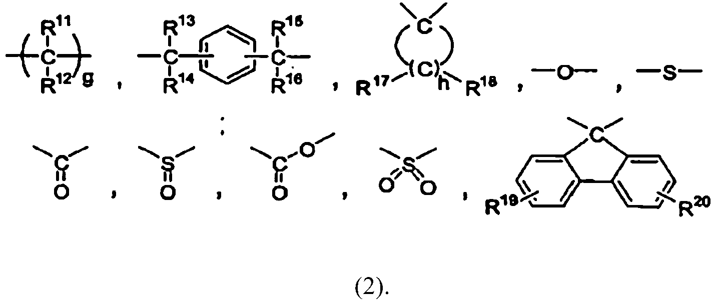

In the above formula (2), g R¹¹ and R¹², R¹³, R¹⁴, R¹⁵, R¹⁶, and h R¹⁷ and R¹⁸ are each independently selected from a group consisting of a hydrogen atom, alkyl groups with 1 to 18 carbon atoms, aryl groups with 6 to 14 carbon atoms, and aralkyl groups with 7 to 20 carbon atoms; R¹⁹ and R²⁰ are each independently a hydrogen atom, a halogen atom, an alkyl group with 1 to 18 carbon atoms, an alkoxy group with 1 to 10 carbon atoms, a cycloalkyl group with 6 to 20 carbon atoms, a cycloalkoxy group with 6 to 20 carbon atoms, an alkenyl group with 2 to 10 carbon atoms, an aryl group with 6 to 14 carbon atoms, an aryloxy group with 6 to 10 carbon atoms, an aralkyl group with 7 to 20 carbon atoms, an arylalkoxy group with 7 to 20 carbon atoms, a nitro group, an aldehyde group, a cyano group, or a carboxyl group; g is an integer from 1 to 10; and h is an integer from 4 to 7.

The polyorganosiloxane part in the component B is composed of structural units of the following formula (3):

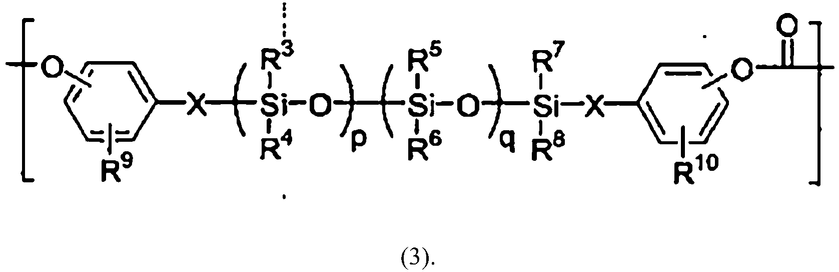

In the above formula (3), R³, R⁴, R⁵, R⁶, R⁷, and R⁸ are each independently selected from a group consisting of a hydrogen atom, alkyl groups with 1 to 12 carbon atoms, and substituted or unsubstituted aryl groups with 6 to 12 carbon atoms; R⁹ and R¹⁰ are each independently selected from a group consisting of a hydrogen atom, halogen atoms, alkyl groups with 1 to 10 carbon atoms, and alkoxy groups with 1 to 10 carbon atoms; p is a positive integer, q is 0 or a positive integer, and an average chain length p+q is a natural number from 30 to 50; and X is a divalent aliphatic group with 2 to 8 carbon atoms.

In some embodiments, the polycarbonate resin has a viscosity-average molecular weight of 15,000 to 30,000.

In some embodiments, the polycarbonate-polyorganosiloxane copolymer has a viscosity-average molecular weight of 15,000 to 27,000.

In some embodiments, the polycarbonate composition further includes 0.1 parts by weight to 1 part by weight of a fluorine-containing anti-drip agent as component E.

In some embodiments, the polycarbonate composition further includes 1 part by weight to 30 parts by weight of an elastomer resin containing styrene-based copolymerization units as component F.

In some embodiments, the elastomer resin containing styrene-based copolymerization units is at least one of ABS resin or ASA resin.

In some embodiments, the phosphorus-based flame retardant is at least one of phosphate ester compounds or phosphazene compounds.

In some embodiments, the phosphazene-based flame retardant contains above 98.5 mol% of phosohazene cyclic trimer.

In some embodiments, the polycarbonate composition has a flame retardancy at V-0 level tested according to the UL-94 V test standard after a water immersion experiment carried out according to standard GB/T11547, at a temperature of 70 °C, for an immersion time of 168 hours.

The embodiments of the present disclosure further provide a molded product processed from the above polycarbonate composition.

The polycarbonate composition according to the embodiments of the present disclosure includes a polycarbonate resin as component A, a polycarbonate-polyorganosiloxane copolymer as component B, polyorganosiloxane-grafted copolymer rubber particles as component C, and a phosphorus-based flame retardant as component D. With coordinating the content of the polyorganosiloxane and the particle size in the component C, the polycarbonate composition can better balance low-temperature impact resistance, thin-wall flame retardancy, and light and water resistance.

### DETAILED DESCRIPTION

The embodiments of the present disclosure provide a polycarbonate composition. The polycarbonate composition includes:
a polycarbonate resin as component A and a polycarbonate-polyorganosiloxane copolymer as component B, totaling 100 parts by weight, and based on a weight of the polycarbonate in the components A and B, the polyorganosiloxane accounts for 0.4 wt% to 5.9 wt%;
0.5 parts by weight to 10 parts by weight of polyorganosiloxane-grafted copolymer rubber particles as component C, and the polyorganosiloxane has a mass percentage of Y% in the component C, the component C has an average particle size of Z nm, and Y and Z satisfy the following condition:
   $Y \geq - Z / 10 + 70 \left(where Y\geq 25, 1000\geq Z\geq 200\right) ;$ and
0.5 parts by weight to 25 parts by weight of a phosphorus-based flame retardant as component D.

It has been found through research that, in the polycarbonate flame-retardant system including the polycarbonate resin as the component A, the polycarbonate-polyorganosiloxane copolymer as component B, and the phosphorus-based flame retardant as component D, when the components A and B contain a certain amount of polyorganosiloxane, and specifically, 0.4 wt% to 5.9 wt% polyorganosiloxane based on the total weight of the components A and B, the polyorganosiloxane-grafted copolymer rubber particles as component C were added, and when the particle sizes of the polyorganosiloxane-grafted copolymer rubber particles range from 200 nm to 1000 nm, with adjusting the particle sizes of the polyorganosiloxane-grafted copolymer rubber particles and the mass percentage of the polyorganosiloxane in the component C, increasing the mass percentage of the polyorganosiloxane in the component C as the particle sizes of the polyorganosiloxane-grafted copolymer rubber particles decrease, and particularly, when the particle sizes of the polyorganosiloxane-grafted copolymer rubber particles and the mass percentage of the polyorganosiloxane in the component C satisfy the following condition: Y ≥ - Z/10 + 70 (where Y ≥ 25, 1000 ≥ Z ≥ 200), the polycarbonate composition can better balance low-temperature impact resistance, thin-wall flame-retardancy, and light and water resistance.

In some embodiments, the polycarbonate of the component A and the polycarbonate part in the component B are each independently composed of structural units of the following formula (1):

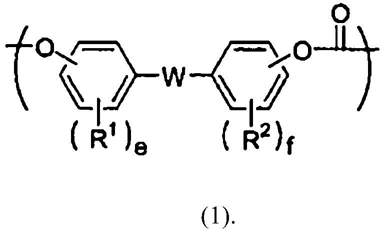

In the above formula (1), e R¹ and f R² are each independently selected from a group consisting of a hydrogen atom, halogen atoms, alkyl groups with 1 to 18 carbon atoms, alkoxy groups with 1 to 18 carbon atoms, cycloalkyl groups with 6 to 20 carbon atoms, cycloalkoxy groups with 6 to 20 carbon atoms, alkenyl groups with 2 to 10 carbon atoms, aryl groups with 6 to 14 carbon atoms, aryloxy groups with 6 to 14 carbon atoms, aralkyl groups with 7 to 20 carbon atoms, arylalkoxy groups with 7 to 20 carbon atoms, nitro groups, aldehyde groups, cyano groups, and carboxyl groups; e and f are each independently an integer from 1 to 4; and W is a single bond or at least one group selected from a group consisting of groups represented by the following general formula (2):

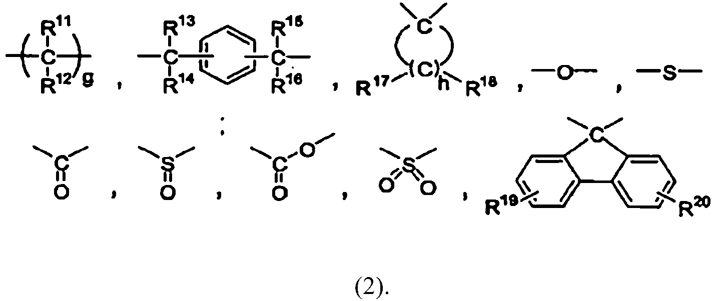

In the above formula (2), g R¹¹ and R¹², R¹³, R¹⁴, R¹⁵, R¹⁶, and h R¹⁷ and R¹⁸ are each independently selected from a group consisting of a hydrogen atom, alkyl groups with 1 to 18 carbon atoms, aryl groups with 6 to 14 carbon atoms, and aralkyl groups with 7 to 20 carbon atoms; R¹⁹ and R²⁰ are each independently a hydrogen atom, a halogen atom, an alkyl group with 1 to 18 carbon atoms, an alkoxy group with 1 to 10 carbon atoms, a cycloalkyl group with 6 to 20 carbon atoms, a cycloalkoxy group with 6 to 20 carbon atoms, an alkenyl group with 2 to 10 carbon atoms, an aryl group with 6 to 14 carbon atoms, an aryloxy group with 6 to 10 carbon atoms, an aralkyl group with 7 to 20 carbon atoms, an arylalkoxy group with 7 to 20 carbon atoms, a nitro group, an aldehyde group, a cyano group, or a carboxyl group; g is an integer from 1 to 10; and h is an integer from 4 to 7.

The polyorganosiloxane part in the component B is composed of structural units of the following formula (3):

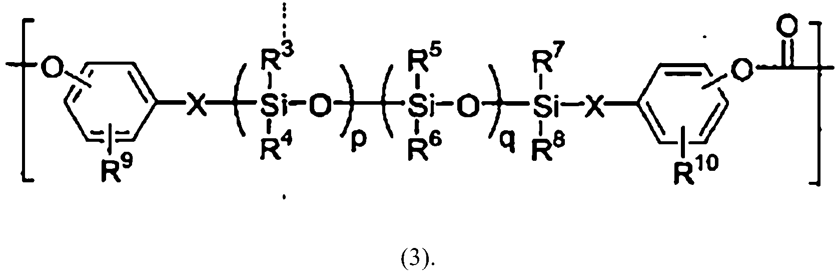

In the above formula (3), R³, R⁴, R⁵, R⁶, R⁷, and R⁸ are each independently selected from a group consisting of a hydrogen atom, alkyl groups with 1 to 12 carbon atoms, and substituted or unsubstituted aryl groups with 6 to 12 carbon atoms; R⁹ and R¹⁰ are each independently selected from a group consisting of a hydrogen atom, halogen atoms, alkyl groups with 1 to 10 carbon atoms, and alkoxy groups with 1 to 10 carbon atoms; p is a positive integer, q is 0 or a positive integer, and an average chain length p+q is a natural number from 30 to 50; and X is a divalent aliphatic group with 2 to 8 carbon atoms.

In some embodiments, the polycarbonate resin as the component A and the polycarbonate-polyorganosiloxane copolymer as the component B total 100 parts by weight, and the polycarbonate resin as the component A can account for 0 weight parts, that is, the polycarbonate-polyorganosiloxane copolymer as the component B accounts completely for 100 weight parts.

In some embodiments, in the component B, the polyorganosiloxane accounts for 0.5 wt% to 50 wt%, further 5 wt% to 10 wt%, and further 6 wt% to 9 wt% of the polycarbonate-polyorganosiloxane copolymer. The weight percentage of the polyorganosiloxane in the polycarbonate-polyorganosiloxane copolymer can be measured by nuclear magnetic resonance (NMR).

In the embodiments of the present disclosure, the halogen atoms may be, for example, fluorine atoms, chlorine atoms, or bromine atoms, or the like.

In the embodiments of the present disclosure, the alkyl groups with 1 to 18 carbon atoms may be, for example, methyl, ethyl, propyl, butyl, pentyl, hexyl, heptyl, octyl, nonyl, decyl, dodecyl, or tetradecyl, or the like.

In the embodiments of the present disclosure, the alkoxy groups with 1 to 18 carbon atoms may be, for example, methoxy, ethoxy, propoxy, butoxy, pentoxy, hexoxy, or octyloxy, or the like.

In the embodiments of the present disclosure, the cycloalkyl groups with 6 to 20 carbon atoms may be, for example, cyclohexyl or cyclooctyl, or the like.

In the embodiments of the present disclosure, the cycloalkoxy groups with 6 to 20 carbon atoms may be, for example, a cyclohexyloxy group or a cyclooctyloxy group, or the like.

In the embodiments of the present disclosure, the alkenyl groups with 2 to 10 carbon atoms may be, for example, vinyl, propenyl, butenyl or pentenyl, or the like.

In the embodiments of the present disclosure, the aryl groups with 6 to 14 carbon atoms may be, for example, phenyl or naphthyl.

In the embodiments of the present disclosure, the aryloxy groups with 6 to 14 carbon atoms may be, for example, a phenoxy group or a naphthoxy group.

In the embodiments of the present disclosure, the aralkyl groups with 7 to 20 carbon atoms may be, for example, benzyl or phenyethyl, or the like.

In the embodiments of the present disclosure, arylalkoxy groups with 7 to 20 carbon atoms may be, for example, a benzyloxy group or a phenylethyloxy group.

In the embodiments of the present disclosure, the alkyl groups with 1 to 12 carbon atoms may be, for example, methyl, ethyl, propyl, butyl, pentyl, hexyl, heptyl, octyl, nonyl, decyl, or dodecyl, or the like.

In the embodiments of the present disclosure, the substituted or unsubstituted aryl groups with 6 to 12 carbon atoms may be, for example, phenyl or naphthyl, or the like. The substituent may be, for example, methyl, ethyl, propyl, butyl, pentyl, or hexyl or other alkyl groups with 1 to 12 carbon atoms.

In some embodiments of the present disclosure, R³, R⁴, R⁵, R⁶, R⁷ and R⁸ are each independently methyl.

In the embodiments of the present disclosure, the alkyl groups with 1 to 10 carbon atoms may be, for example, methyl, ethyl, propyl, butyl, pentyl, hexyl, heptyl, octyl, nonyl, decyl, or dodecyl, or the like.

In the embodiments of the present disclosure, the alkoxy groups with 1 to 10 carbon atoms may be, for example, methoxy, ethoxy, propoxy, butoxy, pentoxy, hexoxy, heptoxy, or octyloxy, or the like.

In some embodiments of the present disclosure, p is 5 to 100, further 30 to 60; q is 0 to 80, further 0 to 50; and p+q is 5 to 70, further 20 to 60, and further 30 to 50.

In some embodiments of the present disclosure, the divalent aliphatic group may be, for example, an alkylene group with 2 to 8 carbon atoms, such as, an ethylene group, a propylidene group, or a butylidene group, or the like.

In some embodiments of the present disclosure, X is a propylidene group, and R⁹ and R¹⁰ are each independently a hydrogen atom or a methoxy group.

In some embodiments of the present disclosure, the polycarbonate is prepared by reacting a diphenol and/or an aliphatic diol with a carbonate precursor through a specific reaction preparation method, such as, an interfacial polymerization method, a melt transesterification method, a solid-phase transesterification method of carbonate prepolymers, and ring-opening polymerization of a cyclic carbonate compound, and the like.

In some embodiments of the present disclosure, the diphenol may be, for example, *p-*dihydroxybenzene, resorcinol, 4,4'-dihydroxydiphenylbiphenyl, bis(4-hydroxyphenyl)methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (commonly known as bisphenol A), 2,2-bis{((4-hydroxy-3-methyl)phenyl}propane, 2,2-bis{(4-hydroxy-3,5-dimethyl)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)-4-isopropylcyclohexane, 1,1-bis(4-hydroxyphenyl)-3,3,5-trimethylcyclohexane, 9,9-bis(4-hydroxyphenyl)fluorene, 9,9-bis{(4-hydroxy-3-methyl)phenyl}fluorene, α,α'-bis(4-hydroxyphenyl-o-diisopropylbenzene), α,α'-bis(4-hydroxyphenyl)-m-diisopropylbenzene, α,α'-bis(4-hydroxyphenyl)-*p-*diisopropylbenzene, 1,3-bis(4-hydroxyphenyl)-5,7-dimethyladamantane, 4,4'-dihydroxydiphenylsulfone, 4,4'-dihydroxydiphenylsulfoxide, 4,4'-dihydroxydiphenyl sulfoxide, 4,4'-dihydroxydiphenylsulfide, 4,4'-dihydroxydiphenylketone, 4,4'-dihydroxydiphenylether, and 4,4'-dihydroxydiphenylester, and the like. These diphenols may be used alone or by mixing two or more thereof. In consideration of the impact resistance, in some embodiments, the diphenol is bisphenol A.

In some embodiments of the present disclosure, the aliphatic diol may be, for example, 2,2-bis-(4-hydroxycyclohexyl)-propane, 1,14-tetradecanediol, octaethylene glycol, 1,16-hexadecanediol, 4,4'-bis(2-hydroxyethoxy)biphenyl, bis{(2-hydroxyethoxy)phenyl}methane, 1,1-bis{(2-hydroxyethoxy)phenyl}ethane, 1,1-bis{(2-hydroxyethoxy)phenyl}-1-phenylethane, 2,2-bis{(2-hydroxyethoxy)phenyl}propane, 2,2-bis{(2-hydroxyethoxy)-3-methylphenyl}propane, 1,1-bis{(2-hydroxyethoxy)phenyl}-3,3,5-trimethylcyclohexane, 2,2-bis{4-(2-hydroxyethoxy)-3,3'-biphenyl}propane, 2,2-bis{(2-hydroxyethoxy)-3-isopropylphenyl}propane, 2,2-bis{3-*tert*-butyl-4-(2-hydroxyethoxy)phenyl}propane, 2,2-bis{(2-hydroxyethoxy)phenyl}butane, 2,2-bis{(2-hydroxyethoxy)phenyl}-4-methylpentane, 2,2-bis{(2-hydroxyethoxy)phenyl}octane, 1,1-bis{(2-hydroxyethoxy)phenyl}decane, 2,2-bis{3-bromo-4-(2-hydroxyethoxy)phenyl}propane, 2,2-bis{3,5-dimethyl-4-(2-hydroxyethoxy)phenyl}propane, 2,2-bis{3-cyclohexyl-4-(2-hydroxyethoxy)phenyl}propane, 1,1-bis{3-cyclohexyl-4-(2-hydroxyethoxy)phenyl}cyclohexane, bis{(2-hydroxyethoxy)phenyl}diphenylmethane, 9,9-bis{(2-hydroxyethoxy)phenyl}fluorene, 9,9-bis{4-(2-hydroxyethoxy)-3-methylphenyl}fluorene, 1,1-bis{(2-hydroxyethoxy)phenyl}cyclohexane, 1,1-bis{(2-hydroxyethoxy)phenyl}cyclopentane, 4,4'-bis(2-hydroxyethoxy)diphenyl ether, 4,4'-bis(2-hydroxyethoxy)-3,3'-dimethyldiphenyl ether, 1,3-bis[2-{(2-hydroxyethoxy)phenyl}propyl]benzene, 1,4-bis[2-{(2-hydroxyethoxy)phenyl}propyl]benzene, 1,4-bis{(2-hydroxyethoxy)phenyl}cyclohexane, 1,3-bis{(2-hydroxyethoxy)phenyl}cyclohexane, 4,8-bis{(2-hydroxyethoxy)phenyl}tricyclic [5.2.1.0^{2,6}]decane, 1,3-bis{(2-hydroxyethoxy)phenyl}-5,7-dimethyladamantane, 3,9-bis(2-hydroxy-1,1-dimethylethyl)-2,4,8,10-tetraoxspirocyclo(5,5)undecane, 1,4:3,6-dianhydro-D-sorbitol (isosorbide), 1,4:3,6-dianhydro-D-mannitol (isomannitol), or 1,4:3,6-dianhydro-L-iditol (isoiditol), or the like.

In some embodiments of the present disclosure, the carbonate precursor may be, for example, carbonyl halides, carbonates, or a halogenated formates, or the like, and specifically, phosgene, diphenyl carbonates, or dihalogenated formats of diphenols, or the like. In consideration of benefits for industrialization, in some embodiments, the carbonate precursor is phosgene or a diphenyl carbonate.

In some embodiments of the present disclosure, the polycarbonate has a viscosity-average molecular weight of 15000 to 30000. In some embodiments, the polycarbonate has a viscosity-average molecular weight of 18000 to 25000.

In some embodiments of the present disclosure, the polycarbonate-polyorganosiloxane copolymer has a viscosity-average molecular weight of 15000 to 27000. In some embodiments, polycarbonate-polyorganosiloxane copolymer has a viscosity-average molecular weight of 18000 to 25000.

The viscosity-average molecular weight is obtained as follows. Firstly, A specific viscosity (η_{SP}) is calculated using an Ostwald viscometer on a solution obtained by dissolving 0.7 g of an aromatic polycarbonate in 100 mL dichloromethane at 20 °C, according to the following equation.$Specific viscosity \left({η}_{SP}\right) = \left(t-{t}_{0}\right) / {t}_{0}$
[t₀ is seconds it takes for dichloromethane to drop, t is seconds it takes for a sample solution to drop]

Then, the viscosity-average molecular weight M can be calculated from the obtained specific viscosity (η_{SP}) by the following equation.${η}_{SP} / c = \left[η\right] + 0.45 \times {\left[η\right]}^{2} c \left(where, \left[η\right] is a limiting viscosity\right)$$\left[η\right] = 1.23 \times {10}^{- 4} {M}^{0.83}$

c=0.7_{∘}

In some embodiments, the polyorganosiloxane-grafted copolymer rubber particles contain a polyorganosiloxane rubber component and a graft comonomer component. In some embodiments, the polyorganosiloxane rubber component is a polyorganosiloxane rubber or a polyorganosiloxane-(methyl)acrylate (IPN type) composite rubber. The (methyl)acrylate may be, for example, alkyl acrylate esters, such as, methyl acrylate, ethyl acrylate, n-propyl acrylate, n-butyl acrylate, and 2-ethylhexyl acrylate, and the like, and hexyl methacrylate, 2-ethylhexyl methacrylate, n-lauryl methacrylate, and the like. In some embodiments, the graft comonomer component is (methyl)acrylate. In some embodiments, the graft comonomer component may also be aromatic vinyl compounds or vinyl cyanide compounds, or the like.

In some embodiments, the polyorganosiloxane in the polyorganosiloxane-grafted copolymer rubber particles ispolydimethylsiloxane.

In some embodiments, the average particle size Z nm of the C component is 250 nm to 750 nm. In some embodiments, the average particle size Z nm of the C component is 300 nm to 500 nm.

In some embodiments, the Y% of the mass percentage of the polyorganosiloxane in the C component is 25 wt% to 75 wt%. In some embodiments, the Y% of the mass percentage of the polyorganosiloxane in the C component is 30 wt% to 70 wt%.

The average particle size of the polyorganosiloxane-grafted copolymer can be measured as follows.

After a sample to be tested was prepared into a solution of 3wt% with deionized water, a number average particle size was measured by a particle size distributor (CHDF2000 type, produced by MATEC). A median diameter of the particles is taken as the measured number average particle size Dn.

The instrument can be setted as follows.

Sample carrier: special capillary tube for particle separation, carrier of type 1 (trade name: C-202).

Current-carrying: Dedicated current-carrying liquid (trade name: 2XGR500).

Current-carrying acidity and alkalinity: neutral.

Current-carrying flow rate: 1.4 ml/min.

Current-carrying pressure: 4,000 psi (2,600 kPa).

Temperature where measurement is carried out: 35 °C.

Sample usage: 0.1 mL.

The mass percentage of the organosiloxane in the polyorganosiloxane-grafted copolymer rubber particles can be measured by a test method of silicon atom nuclear magnetic resonance (29Si-NMR). The nuclear magnetic resonance can be implemented as follows.

Tris(2,4-pentanedione)chromium(III) was added into deuterated chloroform or dimethyl sulfoxide-D6 to form a solution at a concentration of 0.5 wt%, which was used as a solvent for the 29Si-NMR measurement. If polyorganosiloxane is not soluble in deuterated chloroform or dimethyl sulfoxide-D6, a heavy water solution with a concentration of 0.5 wt% chromium chloride (I I I) hexahydrate is used as the solvent for 29Si-NMR measurement. 1.5 g of the sample to be tested was weighed and put into 2.5 ml of the above 29Si-NMR measurement solvent, dissolved, and then put into an NMR test tube made of Teflon ^{®}. Subsequently, 29Si-NMR (made by Japan Electronics Co., Ltd., JNM-ECS400, TUNABLE (10), silicon-free, AT10 probe) was used to measure at ambient temperature of 25 °C with relaxation delay/15 seconds, the number of scans/1024 times, the measurement mode of non-gate decoupling pulse method (NNE), and the spin-free setting. Content of the organosiloxane in the copolymer can be calculated based on signal response strength of each component.

In some embodiments, the phosphorus-based flame retardant is at least one of phosphate ester compounds or phosphazene compounds. In some embodiments, the phosphate ester compounds are aryl phosphate compounds. In some embodiments, the aryl phosphate compounds have the following structure:

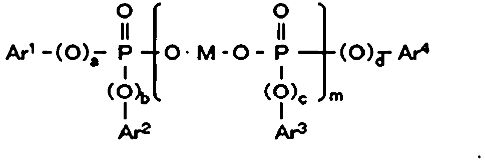

In the above formula, M represents a divalent organic group derived from a diphenol, and Ar¹, Ar², Ar³, and Ar⁴ each independently represent a monovalent organic group derived from a monophenol. a, b, c, and d are each independently 0 or 1. m is an integer from 0 to 5. In a case of a mixture of condensed phosphate esters with different polymerization degrees m, m represents an average value from 0 to 5. The diphenol from which M is derived can specifically be, for example, *p*-dihydroxybenzene, resorcinol, bis(4-hydroxydiphenyl)methane, bisphenol A, dihydroxydiphenyl, dihydroxynaphthalene, bis(4-hydroxyphenyl)sulfone, bis(4-hydroxyphenyl) ketone, or bis(4-hydroxyphenyl)sulfide, or the like. The monophenols from which Ar¹, Ar², Ar³, and Ar⁴ are derived can specifically be, for example, phenol, cresol, xylenol, isopropylphenol, butylphenol, *p*-cumylphenol, or 2,6-dimethylphenol, or the like. In some embodiments, the aryl phosphate compounds are monophosphate compounds, such as, tri(2,6-xylyl) phosphate, or phosphate ester compounds primarily based on resorcinol bis(2,6-xylyl) phosphate, phosphate ester compounds primarily based on 4,4'-dihydroxydiphenyl bis(diphenyl phosphate), or phosphate ester compounds primarily based on bisphenol A bis(diphenyl phosphate), or the like. In some embodiments, the monophenols of the aryl phosphate compounds can be substituted by a halogen atom. Specific examples of the aryl phosphate compounds having groups derived from the monophenols may include tris(2,4,6-tribromophenyl) phosphate, tris(2,4-dibromophenyl) phosphate, or tris(4-bromophenyl) phosphate, or the like.

In some embodiments, the phosphazene-based flame retardant has a structure shown in the following formula:

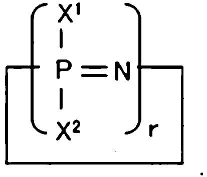

In the above formula, X¹ and X² are each independent an aryl group or an aryloxy group, and specifically, a phenyl group or a phenoxy group, for example, and r is an integer from 3 to 10. In some embodiments, content of phosohazene cyclic trimer (k=3) in the phosphazene-based flame retardant is above 90 mol%. In some embodiments, the content of the phosohazene cyclic trimer (k=3) in the phosphazene-based flame retardant is above 98.5 mol%.

In some embodiments, the polycarbonate composition further contains 0.1 parts by weight to 1 part by weight of a fluorine-containing anti-drip agent as component E. The fluorine-containing anti-drip agent may be, for example, polytetrafluoroethylene, tetrafluoroethylene-based copolymers (such as, tetrafluoroethylene/hexafluoropropylene copolymer, etc.), a part of fluorinated polymers as shown in the Official Gazettee No. 4379910 of the U.S. Patent Office, polycarbonate resins prepared from fluorinated diphenol, and the like. In some embodiments, the anti-drip agent is polytetrafluoroethylene (PTFE).

In some embodiments, the polycarbonate composition further contains 1 part by weight to 30 parts by weight, further 2 parts by weight to 10 parts by weight of an elastomer resin containing styrene-based copolymerization units as component F. The styrene-based copolymerization units may be, for example, styrene, α-methylstyrene, *o*-methylstyrene, *p-*methylstyrene, vinyl xylene, ethylstyrene, dimethylstyrene, *p*-*tert*-butylstyrene, vinylnaphthalene, or methoxystyrene, or the like. In some embodiments, a comonomer of the elastomer resin includes acrylonitrile. In some embodiments, a rubber unit comonomer of the elastomer resin includes diene monomers and/or acrylate-based monomers. The diene monomers may be, for example, isoprene, butadiene, or chloroprene, or the like. The acrylate-based monomers may be at least one of acrylates and methacrylates. The acrylates may be, for example, methyl acrylate, ethyl acrylate, butyl acrylate, cyclohexyl acrylate, octyl acrylate, and the like. The methacrylates may be, for example, methyl methacrylate, ethyl methacrylate, butyl methacrylate, cyclohexyl methacrylate, or octyl methacrylate, or the like. In some embodiments, the elastomer resin containing styrene-based copolymerization units is at least one of ABS resin or ASA resin.

In some embodiments, the polycarbonate composition has excellent water immersion resistance and flame-retardant retention properties. The polycarbonate composition has a flame retardancy at V-0 level tested according to the UL-94 V test standard after a water immersion experiment carried out according to standard GB/T11547, at a temperature of 70 °C, for an immersion time of 168 hours.

In some embodiments, the polycarbonate resin as the component A, the polycarbonate-polyorganosiloxane copolymer as the component B, and the polyorganosiloxane-grafted copolymer rubber particles as the component C constitute a polymer resin part in the polycarbonate composition. In some embodiments, the polycarbonate composition has a Charpy impact strength above 25 kJ/m2 at -30 °C tested in accordance with ISO-179. In some embodiments, the polycarbonate composition has a Charpy impact strength above 18 kJ/m2 at - 30 °C in accordance with ISO-179 after a water immersion experiment carried out according to the GB/ T11547 standard, at a temperature of 70 °C, for an immersion time of 168 hours. In some embodiments, the polycarbonate composition has a Charpy impact strength above15 kJ/ m2 at - 30 °C in accordance with ISO-179 after a light resistance experiment carried out according to ASTM G155 (Cycle 1) standard, at a temperature of 63±3 °C, under a humidity of 50±10%RH, with pure water being spraying, for each spraying time of 18 minutes, for a waterless time between two sprays of 102 minutes,and 500 water spraying cycles.

In some embodiments, the polycarbonate resin as the component A, the polycarbonate-polyorganosiloxane copolymer as the component B, and the polyorganosiloxane-grafted copolymer rubber particles as the component C, and the elastomer resin with the styrene-based copolymerization units as the F component constitute a polymer resin part in the polycarbonate composition. In some embodiments, the polycarbonate composition has a Charpy impact strength above 16 kJ/m2 at -30 °C tested in accordance with ISO-179. In some embodiments, the polycarbonate composition has a Charpy impact strength above 10 kJ/m2 at -30 °C in accordance with ISO-179 after a water immersion experiment carried out according to the GB/ T11547 standard, at a temperature of 70 °C, for an immersion time of 168 hours. In some embodiments, the polycarbonate composition has a Charpy impact strength above 8 kJ/ m2 at -30 °C in accordance with ISO-179 after a light resistance experiment carried out according to ASTM G155 (Cycle 1) standard, at a temperature of 63±3 °C, under a humidity of 50±10%RH, with pure water being spraying, for each spraying time of 18 minutes, for a waterless time between two sprays of 102 minutes, and 500 water spraying cycles.

In some embodiments, the composition further includes an ultraviolet absorber. In some embodiments, the ultraviolet absorber is at least one selected from a group consisting of titanium oxide, zinc oxide, zirconia, phenylprotriazole-based ultraviolet absorbers, triazine-based ultraviolet absorbers, oxazine-based ultraviolet absorbers, or malonates.

In some embodiments, the composition further includes a release agent. In some embodiments, the release agent is at least one selected from a group consisting of fatty acid esters, polyolefin waxes, silicone compounds, fluorine compounds (fluorine oil represented by polyfluoroalkyl ethers, etc.), paraffin, and beeswax, and the like.

In some embodiments, the composition further includes a stabilizer, such as a phosphorus-based stabilizer or a hindered phenolic antioxidant.

In some embodiments, the composition further includes a metal passivator. In some embodiments, the metal passivator is dodecanedioic acid bis[2-(2-hydroxybenzoyl)hydrazide].

In order to give a product various functions and improve its properties, an own original additive in a small amount can also be added in a common combing amount, as long as it does not affect the purpose of the present disclosure The above additives may be, for example, a gliding agent (e.g., PTFE particles), a colorant (e.g., carbon black, titanium oxide and other pigments, dyes), light diffusers (e.g., acrylic cross-linked particles, silicone cross-linked particles, ultra-thin glass flakes, calcium carbonate particles), fluorescent dyes, inorganic phosphors (e.g., phosphors crystallized with aluminate as the mother), an antistatic agent, a nucleating agent, inorganic and organic antibacterial agents, a photocatalytic antifouling agent (e.g., particulate titanium oxide, particulate zinc oxide), a free radical generator, an infrared absorber (hot absorbers), and a photochromic agent, and the like.

The embodiments of the present disclosure further provide a method for preparing the polycarbonate composition described above. The method includes preparing the polycarbonate composition by a method of blending or a method of granulation after blending using a raw material including a polycarbonate resin as component A, a polycarbonate-polyorganosiloxane copolymer as component B, polyorganosiloxane-grafted copolymer rubber particles as component C, and a phosphorus-based flame retardant as component D.The components A, B, C and D are formulated as follows.

The polycarbonate resin as the component A and the polycarbonate-polyorganosiloxane copolymer as the component B total 100 parts by weight, and based on a total weight of the components A and B, the polyorganosiloxane accounts for 0.4 wt% to 5.9 wt%.

There are 0.5 parts by weight to 10 parts by weight of polyorganosiloxane-grafted copolymer rubber particles as the component C. The polyorganosiloxane has a mass percentage of Y% in the component C, the component C has an average particle size of Z nm, and Y and Z satisfy the following condition:
$Y \geq - Z / 10 + 70 \left(where Y\geq 25, 1000\geq Z\geq 200\right) .$

There are 0.5 parts by weight to 25 parts by weight of the phosphorus-based flame retardant as the component D.

The method for preparing the polycarbonate composition according to the embodiments of the present disclosure can be used to prepare a polycarbonate composition balancing the low-temperature impact resistance, thin-wall flame retardance and light and water resistance.

In the method for preparing the polycarbonate composition according the embodiments of the present disclosure, the blending may be carried out by, for example, fully mixing the components A, B, C and D with any other components by a pre-mixing method, such as, a V-type mixer, a Hanschel mixer, a chemical power equipment, an extruder mixer, and the like. The granulation may be carried out by granulating by an extruder granulator and a granulator, etc. as required, and then melting mixing by a melt mixer represented by an exhaust twin-screw extruder, and granulating with a granulator, and the like.

The embodiments of the present disclosure further provide a molded product processed from the polycarbonate composition described above. In some embodiments, the polycarbonate composition is prepared into various molded products by a method where particles are used to obtain molded products by injection molding. In the injection molding, an ordinary cold runner molding method can be adopted, but a hot runner method without material handle can also be adopted. In the injection molding, an ordinary molding method can be used, but gas-assisted injection molding, injection compression molding, ultra-high-speed injection molding, injection molding molding, two-color molding, sandwich molding, mold cladding molding, insert molding molding, foam molding (including the use of supercritical fluids), rapid heating and cooling mold molding, insulation mold molding and in-mold remelt molding, and a combination of these molding methods, and the like, can also be used. In some embodiments, various special-shaped extrusion products are made through extrusion molding and4 used in forms of sheets, and the like. In the molding of sheets and films, blowing and casting and other molding methods can be used, a heat shrink hose can be formed by performing a specific extension operation, and the molded product can also be made by rotational molding without melting and mixing resin. In some embodiments, the molded product is mechanical parts, automobile parts, electrical and electronic parts, or office equipment parts, or the like.

The present disclosure will be further illustrated by examples below.

### Examples

### Performance Test Instructions

### 1) Flame retardance test

Flame retardance was measured using UL94 specification (V test). The thicknesses of the test splines of examples 1~6 and the comparative examples 1~9 are 1.5 mm. The thicknesses of the test splines of examples 7~17 and comparative examples 10~21 are 2.0 mm.

### 2) Charpy impact strength test

The ISO-179 standard was used to measure the test splines of 80 mm×10 mm×4 mm. The impact strength of the Charpy notch was measured under an ambient condition of 23 °C.

### 3) Water immersion experiment

The water immersion experiment was carried out according to GB/T11547 standard, at a temperature of 70 °C, for an immersion time is 168 hours.

### 4) Light resistance test

The light resistance test was carried out according to ASTM G155 (Cycle 1) standard, at a temperature of 63±3 °C, under a humidity of 50±10%RH, with pure water bing spraying, for each spray time of 18 minutes, with a waterless time between sprays of 102 minutes and 500 water spray cycles.

### 5) Fluidity test

(in-house method) Fluidity evaluation was performed by injecting with an injection molding machine [Toshiba Machinery Co., Ltd. IS170GN-5Y] into an Archimedes spiral flow long mold (2 mm thick and 8 mm wide of the flow path). Injection molding conditions: the injection pressure is set to 98MPa, and examples 1~6 and comparative examples 1~9 had barrel temperatures of 280 °C and mold temperatures of 70 °C, examples 7~17 and comparative examples10~21 had barrel temperatures of 260 °C and mold temperatures of 70 °C.

### Raw material description

A-1 Polycarbonate resin: polycarbonate resin powder with a viscosity-average molecular weight of 22,400 prepared from bisphenol A and phosgene by a conventional method (in-house product);
A-2 Polycarbonate resin: polycarbonate resin powder with a viscosity-average molecular weight of 19,700 prepared from bisphenol A and phosgene by a conventional method (in-house product).

B-1 Polycarbonate-polyorganosiloxane copolymer: polycarbonate-polydimethylsiloxane copolymer with a viscosity-average molecular weight of 19,700, a mass percentage of polydimethylsiloxane of 8.4wt%, and a polydimethylsiloxane polymerization degree of 37 (in-house product);
B-2 Polycarbonate-polyorganosiloxane copolymer: polycarbonate-polydimethylsiloxane copolymer with a viscosity-average molecular weight of 23,900, a mass percentage of polydimethylsiloxane of 8.4 wt%, and a polydimethylsiloxane polymerization degree of 37 (in-house product).

C-1 Polyorganosiloxane-grafted acrylate copolymer rubber particles: polydimethylsiloxane (polyorganosiloxane) content of 70 wt%, average particle size of 250 nm;
C-2 Polyorganosiloxane-grafted acrylate copolymer rubber particles: Polydimethylsiloxane (polyorganosiloxane) content of 30 wt%, average particle size of 500 nm;
C-3 Polyorganosiloxane-grafted acrylate copolymer rubber particles: polydimethylsiloxane (polyorganosiloxane) content of 30 wt%, average particle size of 500 nm;
C-4 Polyorganosiloxane-grafted acrylate copolymer rubber particles: Polydimethylsiloxane (polyorganosiloxane) content of 70 wt%, average particle size of 150 nm;
C-5 Polyorganosiloxane-grafted acrylate copolymer rubber particles: polydimethylsiloxane (polyorganosiliconoxane) content of 30 wt%, average particle size of 300 nm;
C-6 Polyorganosiloxane-grafted acrylate copolymer rubber particles: polydimethylsiloxane (polyorganosiloxane) content of 7 wt%, average particle size of 200 nm;
C-7 Polyorganosiloxane-grafted acrylate copolymer rubber particles: polydimethylsiloxane (polyorganosiloxane) content of 10 wt%, average particle size of 500 nm;
C-8 MBS (methyl methacrylate, butadiene, styrene terpolymer)
   (C223A, METABLEN^{®}, Mitsubishi Chemical).

D-1 Phosphorus-based flame retardant : a phosphate ester with bisphenol A bis(diphenyl phosphate) as a main component
(Eighth Chemical Industry Co., Ltd., CR741)

D-2 The phosphazene with a structure represented by the following formula, and the content of trimer (k=1) is 68 mol%, the content of tetramer (k=2) is 18 mol%, and the content of multimer above k=3 is 14 mol% cyclic phenoxyphosphazene.

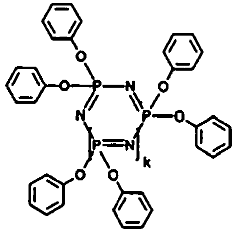

D-3 The phosphazene with a structure represented by the following formula, and the content of trimer (k=1) is above 98.5 mol% cyclic phenoxyphosphazene.

E-1 Fluorine-containing anti-drip agent: polytetrafluoroethylene (Daikin Industries, Ltd., polyflon MPA FA500H);
E-2 Fluorine-containing anti-drip agent: coated PTFE (polytetrafluoroethylene coated with methyl methacrylate and butyl acrylate copolymer) (Mitsubishi Chemical Corporation, MetablenA3750).

F-1 ASA resin (produced by INEOS, LURANS777K);
F-2 ABS resin (produced by Toray Co., Ltd., TOYORAC 700-314).

Stabilizer-1: octadecyl 3-(3,5-di-*tert*-butyl-4-hydroxyphenyl)propionate (BASF Co., Ltd., Irgnox 1076).

Stabilizer-2: tris(2,4-di-*tert*-butylphenyl)phosphite (produced by BASF, Irgafos168).

Release agent: pentaerythritol tetrastearate (RIKEN Vitamin Co., Ltd., EW400).

Ultraviolet absorber: 2,2'-methylene bis[6-(2H-benzotriazole-2-yl)-4-(1,1,3,3-tetramethylbutyl)phenol (produced by ADEKA STAB LA-31)

### Examples 1-17 and Comparative examples 1-21

Examples 1-6 are according to the weight formulation in Table 1 below. Examples 7-17 are according to the weight formulation in Table 3 below. The material ratios in comparative examples 1-9 are according to the weight formulation in Table 2 below. The material ratios in comparative examples 10-31 are according to the weight formulation in Table 4 below with evenly mixing with a drum mixer to make a resin composition, and then the resin composition was conveyed from a barrel of an extruder to an extruder for granulation. The extruder was an exhaust twin-screw extruder with a screw diameter of φ30 mm (Nippon Steel Co., Ltd. TEX-30α). A wire material was extruded under a condition of barrel temperature and head temperature of 280 °C and a suction pressure of 3000 Pa at an exhaust port, cooled in a water bath, and then cut into pellets with a material making machine to complete the granulation process.

In examples 1~6, comparative examples 1~9, examples 7~17, and comparative examples 10~21, the resulting particles were dried at 110 °C and 90 °C with a hot air circulation dryer for 5 hours, respectively, and then injected into test splines by an injection molding machine [Toshiba Machinery Co., Ltd. IS170GN-5Y] for a water immersion experiment and a light resistance test. A flame retardance test and a Charpy impact strength rest were carried out at 23 °C and -30 °C before and after the water immersion experiment and the light resistance test. The test results are listed in Tables 1-4 below. The injection molding conditions: barrel temperature of 260 °C, and mold temperature of 60 °C.

**Table 1. Material ratios and performance test results of examples 1-6**

| | units | examples | | | | | | | | |
|---|---|---|---|---|---|---|---|---|---|---|
| | | 1 | 2 | 3 | 4 | | 5 | | 6 | |
| A-2 | parts by weight | 77.2 | 76.2 | 76.2 | 75.2 | | 76.2 | | 46.2 | |
| B-1 | parts by weight | 20 | 20 | | 20 | | 20 | | 50 | |
| B-2 | parts by weight | | | 20 | | | | | | |
| Contents of polyorganosiloxane in A and B | wt% | 1.73 | 1.75 | 1.75 | 1.76 | | 1.75 | | 4.37 | |
| C-1 | parts by weight | 1 | 2 | 2 | 3 | | 2 | | 2 | |
| D-2 | | | | parts by weight | 1 | 1 | 1 | 1 | | 1 |
| D-3 | | | | parts by weight | | | | | 1 | |
| E-2 | | | | parts by weight | 0.3 | 0.3 | 0.3 | 0.3 | 0.3 | 0.3 |
| Release agent | | | | parts by weight | 0.1 | 0.1 | 0.1 | 0.1 | 0.1 | 0.1 |
| Stabilizer agent-1 | | | | parts by weight | 0.05 | 0.05 | 0.05 | 0.05 | 0.05 | 0.05 |
| Stabilizer agent-2 | | | | parts by weight | 0.05 | 0.05 | 0.05 | 0.05 | 0.05 | 0.05 |
| Ultraviolet absorber` | | | | parts by weight | 0.3 | 0.3 | 0.3 | 0.3 | 0.3 | 0.3 |
| Charpy impact strength | untreated | 23 °C | Impact strength | kJ/m² | 62 | 62 | 64 | 56 | 59 | 56 |
| | | -30 °C | Impact strength | kJ/m² | 29 | 34 | 40 | 42 | 36 | 44 |
| | water immersion experiment | 23 °C | Impact strength | kJ/m² | 51 | 56 | 58 | 51 | 54 | 52 |
| | | | Retention rate | % | 82 | 90 | 91 | 91 | 92 | 93 |
| | | -30 °C | Impact strength | kJ/m² | 18 | 20 | 28 | 30 | 26 | 36 |
| | | | Retention rate | % | 62 | 59 | 70 | 71 | 68 | 82 |
| | Light resistance test | 23 °C | Impact strength | kJ/m² | 47 | 45 | 46 | 44 | 45 | 44 |
| | | | Retention rate | % | 76 | 73 | 75 | 79 | 76 | 79 |
| | | -30 °C | Impact strength | kJ/m² | 18 | 24 | 27 | 26 | 25 | 27 |
| | | | Retention rate | % | 62 | 71 | 66 | 62 | 66 | 61 |
| Flame retardance (1.5 mm) | untreated | | | - | V-0 | V-0 | V-0 | V-0 | V-0 | V-0 |
| | water immersion experiment | | | - | V-0 | V-0 | V-0 | V-0 | V-0 | V-0 |
| | light resistance test | | | - | V-0 | V-0 | V-0 | V-0 | V-0 | V-0 |
| fluidity | | | | cm | 23 | 23 | 21 | 23 | 23 | 22 |

**Table 2. Material ratios and performance test results of comparative examples 1-9**

| | | | | units | Comparative examples | | | | | | | | |
|---|---|---|---|---|---|---|---|---|---|---|---|---|---|
| | | | | | 1 | 2 | 3 | 4 | 5 | 6 | 7 | 8 | 9 |
| A-2 | | | | parts by weight | 68. 2 | 68. 2 | 78. 2 | 75. 2 | 76. 2 | 76. 2 | 95. 2 | 26. 2 | |
| B-1 | | | | parts by weight | 30 | | 20 | 20 | 20 | 20 | | 70 | 96.2 |
| B-2 | | | | parts by weight | | 30 | | | | | | | |
| Contents of polyorganosiloxane in A and B | | | | wt% | 2.5 7 | 2.5 7 | 1.7 1 | 1.9 0 | 1.7 5 | 1.7 5 | 0.0 0 | 6.1 1 | 8.4 0 |
| C-1 | | | | parts by weight | | | | 10 | | | | 2 | 2 |
| C-2 | | | | parts by weight | | | | | | | 3 | | |
| C-4 | | | | parts by weight | | | | | 2 | | | | |
| C-6 | | | | parts by weight | | | | | | 2 | | | |
| D-2 | | | | parts by weight | 1 | 1 | 1 | 1 | | 1 | 1 | 1 | 1 |
| E-2 | | | | parts by weight | 0.3 | 0.3 | 0.3 | 0.3 | 0.3 | 0.3 | 0.3 | 0.3 | 0.3 |
| Release agent | | | | parts by weight | 0.1 | 0.1 | 0.1 | 0.1 | 0.1 | 0.1 | 0.1 | 0.1 | 0.1 |
| Stabilizer agent-1 | | | | parts by weight | 0.0 5 | 0.0 5 | 0.0 5 | 0.0 5 | 0.0 5 | 0.0 5 | 0.0 5 | 0.0 5 | 0.0 5 |
| Stabilizer agent-2 | | | | parts by weight | 0.0 5 | 0.0 5 | 0.0 5 | 0.0 5 | 0.0 5 | 0.0 5 | 0.0 5 | 0.0 5 | 0.0 5 |
| Ultraviolet absorber' | | | | parts by weight | 0.3 | 0.3 | 0.3 | 0.3 | 0.3 | 0.3 | 0.3 | 0.3 | 0.3 |
| Charpy impact strength | untreated | 23 °C | Impact strength | kJ/m² | 60 | 63 | 61 | 44 | 62 | 63 | 55 | 55 | 51 |
| | | 30 °C | Impact strength | kJ/m² | 19 | 20 | 17 | 35 | 34 | 24 | 27 | 44 | 43 |
| | water immersion experiment | 23 °C | Impact strength | kJ/m² | 12 | 14 | 11 | 42 | 49 | 57 | 40 | 48 | 43 |
| | | | Retention rate | % | 20 | 22 | 18 | 95 | 79 | 90 | 73 | 87 | 84 |
| | | 30 °C | Impact strength | kJ/m² | 10 | 12 | 9 | 32 | 19 | 15 | 15 | 37 | 35 |
| | | | Retention rate | % | 53 | 60 | 53 | 91 | 56 | 63 | 56 | 84 | 81 |
| | Light resistance test | 23 °C | Impact strength | kJ/m² | 45 | 48 | 44 | 32 | 45 | 47 | 40 | 43 | 40 |
| | | | Retention rate | % | 75 | 76 | 72 | 73 | 73 | 75 | 73 | 78 | 78 |
| | | - 30 °C | Impact strength | kJ/m² | 10 | 12 | 9 | 20 | 22 | 13 | 14 | 28 | 27 |
| | | | Retention rate | % | 53 | 60 | 53 | 57 | 65 | 54 | 52 | 64 | 63 |
| Flame retardance (1.5 mm) | untreated | | | - | V-0 | V-0 | V-0 | No t-V | No t-V | V-1 | V-1 | V-0 | V-0 |
| | water immersion experiment | | | - | V-0 | V-0 | V-0 | No t-V | No t-V | No t-V | V-1 | V-1 | V-1 |
| | light resistance test | | | - | V-0 | V-0 | V-0 | No t-V | No t-V | V-1 | V-1 | V-0 | V-0 |
| fluidity | | | | cm | 23 | 20 | 24 | 23 | 22 | 22 | 22 | 22 | 22 |

**Table 3. Material ratios and performance test results of examples 7-17**

| | | | | units | examples | | | | | | | | | | |
|---|---|---|---|---|---|---|---|---|---|---|---|---|---|---|---|
| | | | | | 7 | 8 | 9 | 10 | 11 | 12 | 13 | 14 | 15 | 16 | 17 |
| A-1 | | | | parts by weight | 76.1 | 73.1 | 73.1 | 73.1 | 73.1 | 66.1 | 73.1 | 71.1 | 68.1 | 72.9 | 67.1 |
| B-1 | | | | parts by weight | 5 | 8 | 8 | | 8 | 15 | 8 | 8 | 8 | 8 | 8 |
| B-2 | | | | parts by weight | | | | 8 | | | | | | | |
| Contents of polyorganosiloxane in A and B | | | | wt% | 0.52 | 0.83 | 0.83 | 0.83 | 0.83 | 1.55 | 0.83 | 0.85 | 0.88 | 0.83 | 0.89 |
| C-1 | | | | parts by weight | | 4 | | | | | | 6 | 6 | 4 | 4 |
| C-2 | | | | parts by weight | 4 | | 4 | 4 | | 4 | 4 | | | | |
| C-3 | | | | parts by weight | | | | | 4 | | | | | | |
| D-1 | | | | parts by weight | 10 | 10 | 10 | 10 | 10 | 10 | 10 | 10 | 10 | 10 | 10 |
| E-1 | | | | parts by weight | 0.4 | 0.4 | 0.4 | 0.4 | 0.4 | 0.4 | 0.4 | 0.4 | 0.4 | 0.6 | 0.4 |
| F-1 | | | | parts by weight | 4 | 4 | 4 | 4 | 4 | 4 | | 4 | 4 | 4 | 10 |
| F-2 | | | | parts by weight | | | | | | | 4 | | | | |
| Release agent | | | | parts by weight | 0.1 | 0.1 | 0.1 | 0.1 | 0.1 | 0.1 | 0.1 | 0.1 | 0.1 | 0.1 | 0.1 |
| Stabilizer agent-1 | | | | parts by weight | 0.05 | 0.05 | 0.05 | 0.05 | 0.05 | 0.05 | 0.05 | 0.05 | 0.05 | 0.05 | 0.05 |
| Stabilizer agent-2 | | | | parts by weight | 0.05 | 0.05 | 0.05 | 0.05 | 0.05 | 0.05 | 0.05 | 0.05 | 0.05 | 0.05 | 0.05 |
| Ultraviolet absorber` | | | | parts by weight | 0.3 | 0.3 | 0.3 | 0.3 | 0.3 | 0.3 | 0.3 | 0.3 | 0.3 | 0.3 | 0.3 |
| Charpy impact strength | untreated | 23 °C | Impact strength | kJ/m² | 61 | 55 | 57 | 60 | 53 | 61 | 63 | 56 | 53 | 54 | 56 |
| | | -30 | Impact | kJ/m² | 16 | 17 | 16 | 17 | 18 | 18 | 17 | 22 | 17 | 16 | 16 |
| | | °C | strength | | | | | | | | | | | | |
| | water immersion experiment | 23 °C | Impact strength | kJ/m² | 41 | 32 | 33 | 35 | 39 | 47 | 46 | 43 | 31 | 31 | 30 |
| | | | Retention rate | % | 67 | 58 | 58 | 58 | 74 | 77 | 73 | 77 | 58 | 57 | 54 |
| | | -30 °C | Impact strength | kJ/m² | 10 | 10 | 10 | 11 | 13 | 12 | 11 | 14 | 10 | 10 | 10 |
| | | | Retention rate | % | 63 | 59 | 63 | 65 | 72 | 67 | 65 | 64 | 59 | 63 | 63 |
| | Light resistance test | 23 °C | Impact strength | kJ/m² | 54 | 40 | 42 | 47 | 42 | 54 | 49 | 44 | 40 | 29 | 40 |
| | | | Retention rate | % | 89 | 73 | 74 | 78 | 79 | 89 | 78 | 79 | 75 | 72 | 71 |
| | | -30 °C | Impact strength | kJ/m² | 9 | 10 | 10 | 11 | 10 | 11 | 10 | 13 | 10 | 9 | 9 |
| | | | Retention rate | % | 56 | 59 | 63 | 65 | 56 | 61 | 59 | 59 | 59 | 56 | 56 |
| Flame retardance (2.0 mm) | untreated | | | - | V-0 | V-0 | V-0 | V-0 | V-0 | V-0 | V-0 | V-0 | V-0 | V-0 | V-0 |
| | water immersion experiment | | | - | V-0 | V-0 | V-0 | V-0 | V-0 | V-0 | V-0 | V-0 | V-0 | V-0 | V-0 |
| | light resistance test | | | - | V-0 | V-0 | V-0 | V-0 | V-0 | V-0 | V-0 | V-0 | V-0 | V-0 | V-0 |
| fluidity | | | | cm | 24 | 25 | 25 | 24 | 25 | 24 | 23 | 25 | 30 | 25 | 28 |

**Table 4. Material ratios and performance test results of comparative examples 10-21**

| | | | | units | Comparative examples | | | | | | | | | | | |
|---|---|---|---|---|---|---|---|---|---|---|---|---|---|---|---|---|
| | | | | | 10 | 11 | 12 | 13 | 14 | 15 | 16 | 17 | 18 | 19 | 20 | 21 |
| A-1 | | | | parts by weight | 81.1 | 78.1 | 73.1 | 73.1 | 73.1 | 73.1 | 73.1 | 67.1 | 63.1 | 83.1 | 73.5 | 72 |
| B-1 | | | | parts by weight | | 3 | 8 | 8 | 8 | 8 | 8 | 8 | 8 | 8 | 8 | 8 |
| Contents of polyorganosiloxane in A and B | | | | wt% | 0.00 | 0.31 | 0.83 | 0.83 | 0.83 | 0.83 | 0.83 | 0.89 | 0.95 | 0.74 | 0.82 | 0.84 |
| C-2 | | | | parts by weight | 4 | 4 | | | | | | 10 | 4 | 4 | 4 | 4 |
| C-3 | | | | parts by weight | | | | | | | | | | | | |
| C-4 | | | | parts by weight | | | 4 | | | | | | | | | |
| C-5 | | | | parts by weight | | | | 4 | | | | | | | | |
| C-6 | | | | parts by weight | | | | | 4 | | | | | | | |
| C-7 | | | | parts by weight | | | | | | 4 | | | | | | |
| C-8 | | | | parts by weight | | | | | | | 4 | | | | | |
| D-1 | | | | parts by weight | 10 | 10 | 10 | 10 | 10 | 10 | 10 | 10 | 20 | | 10 | 10 |
| E-1 | | | | parts by weight | 0.4 | 0.4 | 0.4 | 0.4 | 0.4 | 0.4 | 0.4 | 0.4 | 0.4 | 0.4 | | 15 |
| F-1 | | | | parts by weight | 4 | 4 | 4 | 4 | 4 | 4 | 4 | 4 | 4 | 4 | 4 | 4 |
| Release agent | | | | parts by weight | 0.1 | 0.1 | 0.1 | 0.1 | 0.1 | 0.1 | 0.1 | 0.1 | 0.1 | 0.1 | 0.1 | 0.1 |
| Stabilizer agent-1 | | | | parts by weight | 0.05 | 0.05 | 0.05 | 0.05 | 0.05 | 0.05 | 0.05 | 0.05 | 0.05 | 0.05 | 0.05 | 0.05 |
| Stabilizer agent-2 | | | | parts by weight | 0.05 | 0.05 | 0.05 | 0.05 | 0.05 | 0.05 | 0.05 | 0.05 | 0.05 | 0.05 | 0.05 | 0.05 |
| Ultraviolet absorber' | | | | parts by weight | 0.3 | 0.3 | 0.3 | 0.3 | 0.3 | 0.3 | 0.3 | 0.3 | 0.3 | 0.3 | 0.3 | 0.3 |
| Charpy impact strength | untreated | 23 °C | Impact strength | kJ/m² | 56 | 60 | 34 | 58 | 56 | 55 | 63 | 49 | 14 | 57 | 58 | 49 |
| | | 30 °C | Impact strength | kJ/m² | 11 | 13 | 11 | 15 | 11 | 13 | 16 | 26 | 8 | 29 | 18 | 11 |
| | water immersion experiment | 23 °C | Impact strength | kJ/m² | 16 | 38 | 9 | 38 | 31 | 24 | 37 | 43 | 9 | 56 | 43 | 27 |
| | | | Retention rate | % | 29 | 63 | 26 | 66 | 55 | 44 | 59 | 88 | 64 | 98 | 74 | 55 |
| | | - 30 °C | Impact strength | kJ/m² | 5 | 8 | 6 | 9 | 7 | 8 | 11 | 16 | 3 | 21 | 12 | 7 |
| | | | Retention rate | % | 45 | 62 | 55 | 60 | 64 | 62 | 69 | 62 | 38 | 72 | 67 | 64 |
| | Light resistance test | 23 °C | Impact strength | kJ/m² | 31 | 53 | 13 | 44 | 41 | 41 | 28 | 36 | 9 | 48 | 44 | 32 |
| | | | Retention rate | % | 55 | 88 | 38 | 76 | 73 | 75 | 44 | 73 | 64 | 84 | 76 | 65 |
| | | - 30 °C | Impact strength | kJ/m² | 7 | 8 | 8 | 10 | 8 | 8 | 7 | 14 | 5 | 17 | 12 | 6 |
| | | | Retention rate | % | 64 | 62 | 73 | 67 | 73 | 62 | 44 | 54 | 63 | 59 | 67 | 55 |
| Flame retardance (2.0 mm) | untreated | | | - | V-0 | V-0 | V-0 | V-0 | V-0 | V-0 | V-0 | V-0 | V-0 | not-V | V-2 | V-0 |
| | water immersion experiment | | | - | V-1 | V-0 | V-0 | V-0 | V-0 | V-0 | V-0 | V-1 | V-0 | not-V | V-2 | V-0 |
| | light resistance test | | | - | V-1 | V-1 | V-0 | V-0 | V-0 | V-0 | V-0 | V-1 | V-0 | not-V | V-2 | V-0 |
| fluidity | | | | cm | 25 | 24 | 24 | 25 | 25 | 25 | 23 | 17 | 37 | 15 | 26 | 24 |

It can be seen from the comparison of the results of the examples in Table 1 with the comparative examples in Table 2, as well as the examples in Table 3 with the comparative examples in Table 4 that, under the same conditions, the polycarbonate compositions according to the present disclosure have better low-temperature impact resistance, thin-wall flame retardancy, and overall light and water resistance.

Although the present disclosure is disclosed as above, the present disclosure is not limited hereto. Various changes and modifications may be made by those skilled in the art, without departing from the spirit and scope of the present disclosure. Thus, the scope of protection of the present disclosure shall be subject to the scope defined by the claims.

## Claims

1. A polycarbonate composition, **characterized by** comprising:
a polycarbonate resin as component A and a polycarbonate-polyorganosiloxane copolymer as component B, totaling 100 parts by weight, wherein, based on a total weight of components A and B, the polyorganosiloxane accounts for 0.4 wt% to 5.9 wt%;
0.5 parts by weight to 10 parts by weight of polyorganosiloxane-grafted copolymer rubber particles as component C, wherein, the polyorganosiloxane has a mass percentage of Y% in the component C, the component C has an average particle size of Z nm, and Y and Z satisfy the following condition: $Y \geq - Z / 10 + 70 \left(where Y\geq 25, 1000\geq Z\geq 200\right) ;$ and
0.5 parts by weight to 25 parts by weight of a phosphorus-based flame retardant as component D.

2. The polycarbonate composition according to claim 1, **characterized in that** the polycarbonate of the component A and the polycarbonate part in the component B are each independently composed of structural units of the following formula (1): 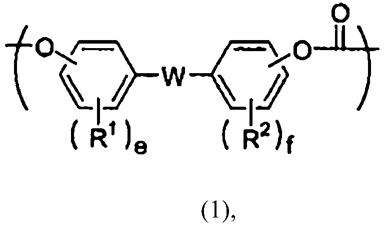
in the above formula (1), e R¹ and f R² are each independently selected from a group consisting of a hydrogen atom, halogen atoms, alkyl groups with 1 to 18 carbon atoms, alkoxy groups with 1 to 18 carbon atoms, cycloalkyl groups with 6 to 20 carbon atoms, cycloalkoxy groups with 6 to 20 carbon atoms, alkenyl groups with 2 to 10 carbon atoms, aryl groups with 6 to 14 carbon atoms, aryloxy groups with 6 to 14 carbon atoms, aralkyl groups with 7 to 20 carbon atoms, arylalkoxy groups with 7 to 20 carbon atoms, nitro groups, aldehyde groups, cyano groups, and carboxyl groups; e and f are each independently an integer from 1 to 4; and W is a single bond or at least one group selected from a group consisting of groups represented by the following general formula (2): 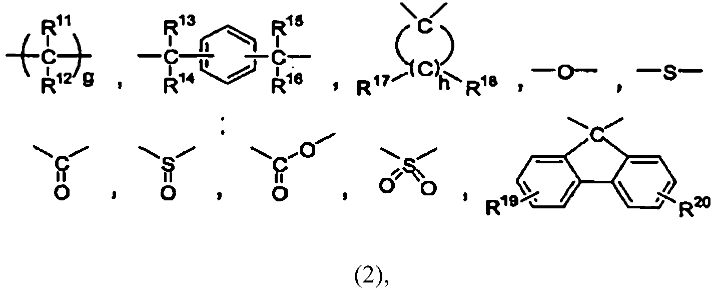
in the above formula (2), g R¹¹ and R¹², R¹³, R¹⁴, R¹⁵, R¹⁶, and h R¹⁷ and R¹⁸ are each independently selected from a group consisting of a hydrogen atom, alkyl groups with 1 to 18 carbon atoms, aryl groups with 6 to 14 carbon atoms, and aralkyl groups with 7 to 20 carbon atoms; R¹⁹ and R²⁰ are each independently a hydrogen atom, a halogen atom, an alkyl group with 1 to 18 carbon atoms, an alkoxy group with 1 to 10 carbon atoms, a cycloalkyl group with 6 to 20 carbon atoms, a cycloalkoxy group with 6 to 20 carbon atoms, an alkenyl group with 2 to 10 carbon atoms, an aryl group with 6 to 14 carbon atoms, an aryloxy group with 6 to 10 carbon atoms, an aralkyl group with 7 to 20 carbon atoms, an arylalkoxy group with 7 to 20 carbon atoms, a nitro group, an aldehyde group, a cyano group, or a carboxyl group; g is an integer from 1 to 10; and h is an integer from 4 to 7;
the polyorganosiloxane part in the component B is composed of structural units of the following formula (3): 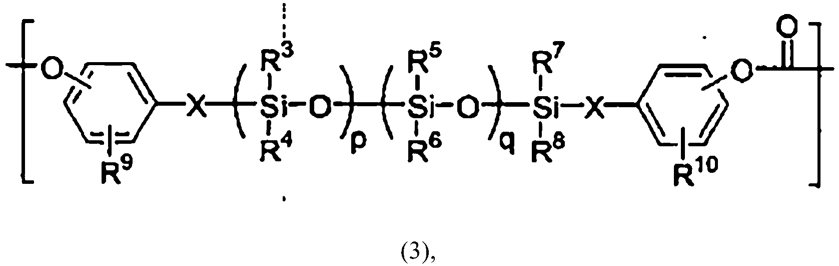
in the above formula (3), R³, R⁴, R⁵, R⁶, R⁷, and R⁸ are each independently selected from a group consisting of a hydrogen atom, alkyl groups with 1 to 12 carbon atoms, and substituted or unsubstituted aryl groups with 6 to 12 carbon atoms; R⁹ and R¹⁰ are each independently selected from a group consisting of a hydrogen atom, halogen atoms, alkyl groups with 1 to 10 carbon atoms, and alkoxy groups with 1 to 10 carbon atoms; p is a positive integer, q is 0 or a positive integer, and an average chain length p+q is a natural number from 30 to 50; and X is a divalent aliphatic group with 2 to 8 carbon atoms.

3. The polycarbonate composition according to claim 1, **characterized in that** the polycarbonate resin has a viscosity-average molecular weight of 15,000 to 30,000.

4. The polycarbonate composition according to claim 1, **characterized in that** the polycarbonate-polyorganosiloxane copolymer has a viscosity-average molecular weight of 15,000 to 27,000.

5. The polycarbonate composition according to claim 1, **characterized by** further comprising 0.1 parts by weight to 1 part by weight of a fluorine-containing anti-drip agent as component E.

6. The polycarbonate composition according to claim 1, **characterized by** further comprising 1 part by weight to 30 parts by weight of an elastomer resin containing styrene-based copolymerization units as component F.

7. The polycarbonate composition according to claim 6, **characterized in that** the elastomer resin containing styrene-based copolymerization units is at least one of ABS resin or ASA resin.

8. The polycarbonate composition according to claim 1, **characterized in that** the phosphorus-based flame retardant is at least one of phosphate ester compounds or phosphazene compounds.

9. The polycarbonate composition according to claim 1, **characterized in that** the phosphazene-based flame retardant contains above 98.5 mol% of phosohazene cyclic trimer.

10. The polycarbonate composition according to claim 1, **characterized in that** the polycarbonate composition has a flame retardancy at V-0 level tested according to the UL-94 V test standard after a water immersion experiment carried out according to standard GB/T11547, at a temperature of 70 °C, for an immersion time of 168 hours.

11. A molded product, **characterized by** being processed from the polycarbonate composition according to any one of claims 1 to 10.
